# EUROPEAN PATENT SPECIFICATION

(11) **EP 0 291 259 B1**
(45) Date of publication and mention of the grant of the patent: **01.02.1995**
(21) Application number: 88304184.0
(22) Date of filing: 09.05.1988
(51) Int. Cl.: G07F 7/10, G09F 9/35, G02F 1/137

(54) **Ferroelectric liquid crystal data storage card**
Karte mit einem Datenspeicher aus ferroelektrischen Flüssigkristallen
Fiche de mémoire des données avec cristaux liquides ferroélectriques

(30) Priority: 09.05.1987 JP 113248/87; 09.05.1987 JP 113249/87; 13.05.1987 JP 117281/87
(43) Date of publication of application: 17.11.1988
(73) Proprietor: SEL SEMICONDUCTOR ENERGY LABORATORY CO., LTD., Atsugi-shi Kanagawa-ken 243 (JP)
(72) Inventor: Yamazaki, Shunpei, Tokyo, 157 (JP)
(74) Representative: Milhench, Howard Leslie

(56) References cited:
- EP-A- 0 220 703
- GB-A- 2 177 228
- GB-A- 2 178 582

## Description

### FIELD OF THE INVENTION

The present invention relates to a credit-card like information-carrying device. Such a device has a data storage capability and can be used for example as a bank cash dispenser (CD) card, as an identity card containing confidential information, or as a card for use in the presale of train passenger tickets and the like. The invention however is not limited to such uses.

### BACKGROUND OF THE INVENTION

Conventionally, the abovementioned credit-type cards comprise a strip of magnetic tape mounted to a paper card or plastics plate. The magnetic strip is arranged to store personal details relating to the card holder, such as account numbers, cash balance details, and the like. However, the storage capacity of the magnetic strip is extremely small, there being just enough room to store a few columns of numbers and symbols. In addition, the details stored on the magnetic strip cannot be rewritten at will.

One solution to the abovementioned problems is provided by the so-called integrated circuit (IC) card, that is to say a card having an integrated circuit which includes an electrically rewritable ROM (EEPROM). The IC card was developed with the object of increasing the storage capacity of credit-type cards. The use of such an integrated circuit provides a large capacity memory in which data can be read and written by way of terminal equipment connected to a host computer. One disadvantage with such (IC) cards is that the terminal equipment is required to read from the card even the smallest amount of data which the cardholder wishes to know, and the data must first be displayed on a suitable display device associated with terminal equipment before the details can be read.

There is therefore a need for a credit-type card which is itself capable of displaying stored data so that it is visible to the user. A liquid crystal display would be suitable for use as the display is such a card because liquid crystal has good display capabilities and a low electrical power consumption. Furthermore, an EEPROM (Electrically Erasable Programmable ROM) would be suitable for use in storing data because an EEPROM has a large storage capacity. However, a problem with using both a liquid crystal display and an EEPROM in the same card is that the number of stages in manufacturing the card would be prohibitively high because of the complexity of the structure of the card. Many other technical problems would also arise.

### SUMMARY OF THE INVENTION

According to the present invention there is provided a credit-card like information-carrying device comprising a data storage portion which is adapted for the non-volatile storage of data and arranged so that stored data can be read only by means of external equipment, such a device being well known for example in the form of a credit card, the device according to the invention being characterized in that said data storage portion comprises a first liquid crystal region of the device and in that the device further comprises a display portion constituted by a second liquid crystal region of the device which is adapted and arranged for the display of data to a user.

In our Japanese Patent Application No. 60-130190 (and the corresponding British Patent Application published as GB-A-2177228) there is disclosed an optical disc memory device which uses a liquid crystal material for data storage and enables data to be written to the device, read from the device and erased, all by use of external equipment. This optical disc memory device is not a credit-card like information-carrying device and does not itself provide for the display of data to a user. Whilst the writing of data to the data storage portion of a credit-card like information-carrying device according to the present invention, the reading and the erasure of such data may be effected in the same manner as in the above-mentioned optical disc memory device, nonethless the present invention is considered to be patentably distinct from the said optical disc memory device.

In a preferred embodiment of the invention the device comprises a credit-type card in which the display region and the memory region are formed from the same liquid crystal material which has strong dielectric characteristics. In this way, the number of processes involved in the manufacture of the card is reduced.

In the presently preferred embodiment of the invention, as will be described in greater detail hereinafter, the credit-type card comprises a pair of substrates; a plurality of electrodes on the substrates; a liquid crystal orientation section on the electrodes; and a liquid crystal material with a strong dielectric property filled between the pair of substrates; wherein a liquid crystal material with a strong dielectric property is utilized to provide for a liquid crystal display region having a matrix structure for displaying diagrams, characters and symbols and to provide for a data storage region to write in, erase, and rewrite external data as a signal by addition of external energy including electrical, heat and light energies to the liquid crystal material.

One feature of the preferred embodiment is the provision of a plurality of protruding sections on the substrate which divide the data storage region of the liquid crystal into storage regions at regular bit pitch intervals.

The above and other objects and features of the present invention are set forth with particularity in the appended claims and together with advantages thereof will become more apparent from the following detailed description of the preferred embodiments of the invention given with reference to the accompanying drawings.

### BRIEF DESCRIPTION OF THE DRAWINGS

FIG.1(A) shows a plan view of a card according to the present invention.

FIG.1(B) shows a sectional diagram of the card according to the present invention.

FIG.1(C) shows a modification of the structure illustrated in Fig.1(B).

FIG.2 is a diagram of the states assumed by the liquid crystal element.

FIG.3 is a diagram showing a card system for use with the present invention.

FIG.4 is a graph showing the characteristics of transmitted light of the storage region of the card of the present invention.

### DETAILED DESCRIPTION OF THE PREFERRED EMBODIMENTS

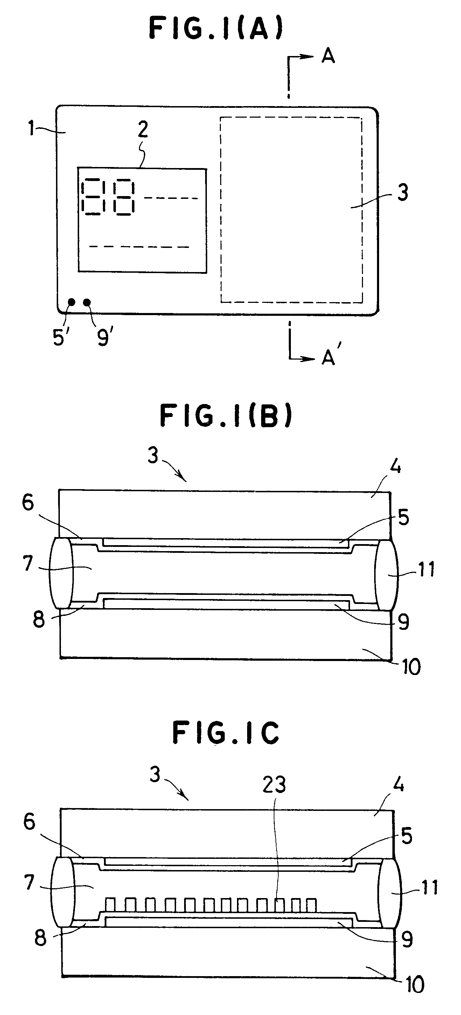

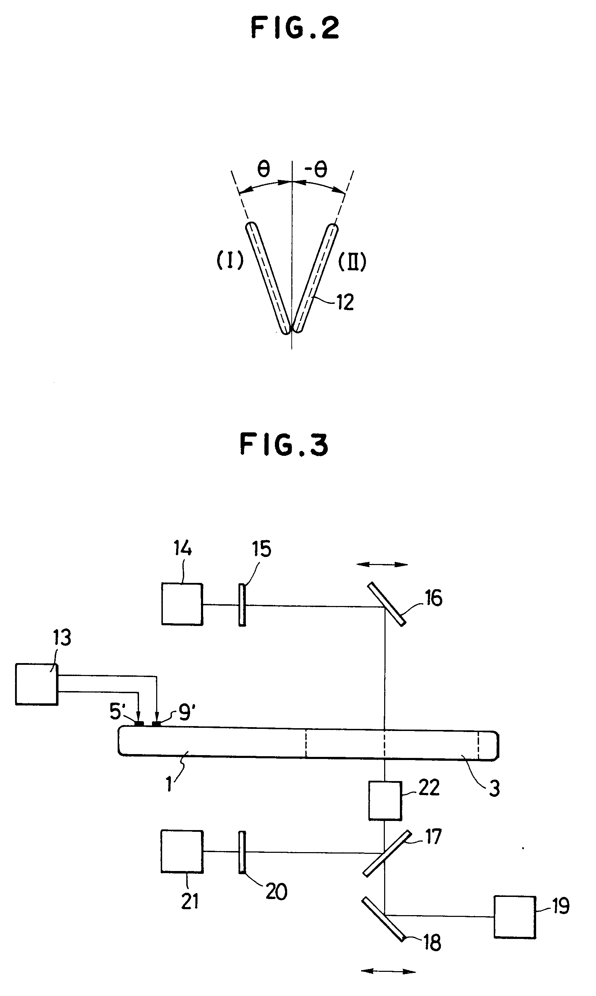

Referring now to Figure 1 of the accompanying drawings, a card 1 is shown which has a display function and a data storage capability. Figure 1(A) is a plan view of the card 1 and Figure 1(B) is a sectional drawing viewing in the direction A-A′ of Figure 1(A). The storage method used in the card is illustrated in FIG.2. As shown in the drawing, a liquid crystal molecule 12 normally lies with its director in a first inclined state at an angle e with respect to the layer normal. When external electric, thermal, or light energy is imparted to the molecule 12, it is changed to lie in a second inclined state at an angle -Θ with respect to the layer normal. The difference in the two states can be determined by detecting the difference in optical characteristics between the first and second states, using an external detection means such as the system shown in Figure 3 of the accompanying drawings. Data is recorded in the memory in binary form with the first state represented as 0 and the second state as 1.

The method by which the liquid crystal molecule is made to assume the first and second states will now be explained with reference to the sectional diagram of a memory region 3 of the card 1, as shown in FIG.1(B).

The method ensures that the directions of the molecules are directed in the same direction throughout the thickness of the liquid crystal layer between a pair of substrates. In the method, which is generally referred to as SSFLC, the states are obtained by spacing the pair of top and bottom substrates 4 and 10 apart from each other by a distance less than a spiral pitch of the ferroelectric liquid crystals 7. In this method, by means of an imposed force from the contact surface of the substrate, the liquid crystal molecule assumes the two states.

The stability of the states are expedited by utilizing the difference in polarity produced when providing a ferroelectric film used for a pair of top and bottom liquid crystal orientation films 6 and 8, so that the liquid crystal molecules are directed.

In addition, there is another expediting method in which the liquid crystal orientation films 6 and 8 are laminated from a dielectric film and a metallic film, and an electric field generated by storing an electrical load in the metallic film, is applied to a liquid crystal layer 7 so as to produce the first and second states.

Returning now to Figure 1 of the accompanying drawings the storage region 3 of the card has a pair of opposing substrates 4 and 10, which are each 8.6 cm wide and 5.4 cm long for example. On the inside surface of each of the substrates 4 and 10, there is provided respective transparent electrodes 5 and 9. Each electrode 5 and 9 has an orientation control film 6 and 8 respectively formed thereon. A ferroelectric liquid crystal (FLC) 7 fills the space between the two substrates 4,10.

In addition, at least one protruding section 23, by which the storage region is partitioned at bit pitch intervals, may be provided on the liquid crystal orientation control film 8 as a position marker, if necessary, as illustrated in FIG.1(C). In this drawing the bit pitch interval is shown as being very wide, but this interval has only been illustrated as being large for the sake of convenience and it should be noted that in practice one protruding section 23 is provided every few micrometers. The storage region on the card is partitioned in one direction, parallel to the periphery of the card.

Specifically, a plurality of protruding sections 23 with a height of 1.5»m, width of 3 »m, at intervals of 5 »m are formed on the orientation control film 8 by a photosensitive polyimide resin. During manufacture, after the photosensitive polyimide resin is applied to the front surface, the specified pattern is formed by means of a photomask. At this stage in manufacture the FLC 7 is filled into the space between the substrates. A sealant 11 is then applied around the periphery of the memory card to prevent the FLC 7 from contacting the air.

A pair of external contact electrodes 5′ and 9′ are provided on the outside periphery of the memory card, extending from the pair of electrodes 5 and 9. As shown in Figure 3 of the accompanying drawings the external contact electrodes 5′ and 9′ are provided to be connected with a lead terminal lead out from a signal source 13. The electrodes 5′,9′ are used int he writing and erasing of data in the memory by the application of voltage to the terminals (full surface erasure method).

Initially zeroes are written in as data for the entire storage region 3 by the system of Figure 3. Data is then written into the storage region in the following manner. Specifically, light is emitted from a light source 19, particularly infrared rays, via a mirror 18 and a half-mirror 17, and via a positioning system 22 for optical focussing and position compensation and the like, onto a specified address in the liquid crystal layer out of domains which are arranged in matrix form across the whole surface, and the state of the liquid crystal molecules at the specified address are shifted from the initial state thereby performing a write-in. At this time, quick, accurate data write-in is possible by the application of a lower voltage than a threshold direct voltage to reverse the liquid crystals between the top and bottom electrodes 5 and 9. The light reaches a photosensor 14 via a mirror 16 and thus the write-in of the data is monitored.

To read out the data, a laser beam radiated from a semiconductor laser 21 is directed onto the storage region 3 via a polarizer 20 and the half-mirror 17, and via an optical system 22 for focussing position compensation or auto tracking. The light transmitted onto the storage region 3 of the memory card reaches a light receiving sensor 14 via the polarizer 15 and the mirror 16. In the light sensor 14 the transmission or non-transmission of the laser beam is detected to read the data.

In this case, when the data is being written in and read out, the mirrors 16, 17 and 18 and the optical system 22 are moved relatively parallel to the card 1 and the data is written into, or read out of, the specified address.

In other words, the card 1 may be moved, or the mirror and optical system moved automatically, or both may be moved simultaneously.

When this data is written in or read out using the protruding section 23, the volume of the liquid crystal 7 on the protruding section 23 is smaller or completely non-existent in comparison with the data storage section 26, so that in the case where the write-in and read-out beams are offset from the data storage section 26, an optical change is not obtained based on the optical anisotropy of the liquid crystal material when the beam reaches the photocell 14. Accordingly, the beam only occurs in a transparent or opaque state (according to the arrangement of the light polarizing means 15 and 20). This is detected electrically, and the position of the mirror and optical system is revised. It is then possible to direct the write-in and read-out beams correctly onto the data storage section 26.

In addition, even if the protruding section is formed from a reflecting material, the position modification can be performed in the same way.

In the storage region 3 of the card 1, the substrates 4 and 10 are formed from plastic or Corning 7059 glass. On these substrates, a transparent conductive film ITO (indium tin oxide) is formed by the vacuum deposition method. Then, on the inside of the pair of substrates 5 and 9, the asymmetric oriented films 6 and 8 are provided, and a liquid crystal cell is formed to have a substrate thickness of 2 »m. The liquid crystal layer 7 is interposed between the substrates. In order that orientation is carried out, on the electrode 5, PAN (polyacryl nitryl) and PVA (polyvinyl alcohol) are provided by a spinning method to a thickness of 0.1 »m, and subjected to a common rubbing process. The orientation control film may be formed of SiO2 or polyimide instead.

An oriented film of an inorganic compound is formed on the other electrode 9, and the liquid crystal orientation control film 8 is provided without rubbing.

Between the liquid crystal orientation control films 6 and 8, a ferroelectric liquid crystal, for example, biphenyl- related chiral smectic liquid crystals is disposed.

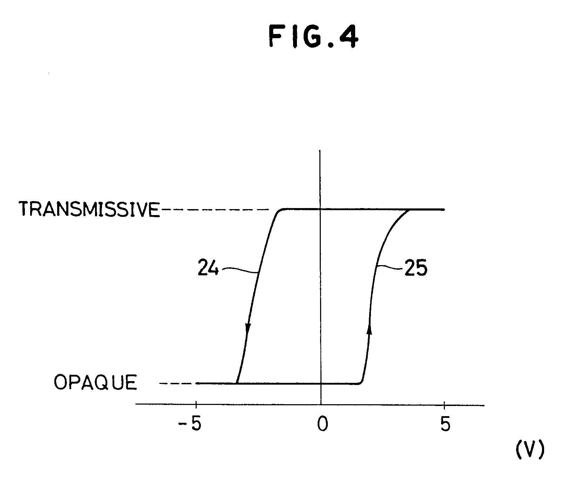

Other than these, BOBAMBC FLC and the like or a blend of a plurality of liquid crystals FLC can be filled. An example of the threshold value characteristics of FLC is given in FIG.4. Also, FIG.4 shows a pair of curves 24 and 25 obtained by the application of ±5 V. Specifically, the light is transmitted or not transmitted by causing the liquid crystal molecule to reverse, and at the same time, hysteresis showing the memory effect is obtained.

In FIG.4, the vertical axis is the transmission ratio of the light.

The display region 2 of the card 1 has substantially the same structure as the previously described storage region 3 except that in this embodiment of the present invention, the pair of electrodes 5 and 9 have a matrix structure, so that characters, diagrams, and symbols can be displayed by means of dots. In addition, the required IC is provided on the card.

Specifically, the storage region 3 and the display region 2 of the card differ only in the shape of the electrodes, with the other structural parts being exactly the same. Therefore, a card which has both of the display function and storage capability can be formed by a conventional process for preparing liquid crystal display devices.

In addition, a pair of light polarizers 15 and 20 are applied, completely covering both sides of the card, so that a light polarizing means in the optical read-out means becomes completely unnecessary.

Also, the light polarizer on the card do double duty as polarizing plates in the display and storage regions.

In addition, the liquid crystal molecule 12 has the capability of self-alignment along the protruding section 23. In this way, the liquid crystal molecules of the data storage section 2 are provided with an improved orientation status with no defects, and the data can be accurately stored in the storage section 3.

The protruding section 23 can also serve as a spacer for the liquid crystal cell. This allows a reduction in the steps and costs of the production process.

The above is one example of the use of this display memory card. In the case where it is used as a CD (Cash Dispenser) card by a bank or the like, the cardholder goes to the bank, then the electrodes 5′ and 9′ of the card are inserted into the CD terminal equipment connected to a computer, so that power is fed to the card, and data such as the cardholder's name, the account number, details of past transactions, and the like is extracted from the card memory by the optical system read-out means. At the same time, new data can be written-in to the card by above described optical method, and the new data displayed visibly on the card.

The liquid crystals used in this display are liquid crystals which show ferroelectrical properties (chiral smectic C liquid crystals), which when sealingly enclosed in a parallel plane space narrower than the spiral pitch of the liquid crystals, is positioned in one of two stable axis directions. These two directions can be selected by means of an electric field. Also even if this electric field is removed, the liquid crystals remain secured in the last stable position. By combining with a polarizing plate, the display (of characters and the like) can be maintained even when there is no power.

Accordingly, when the card is removed from the CD terminal and the power supply to the card is cut off, the data remains in both the memory region 3 and in the display region 2. In this way, the user at any time, anywhere, can see the contents of the display region 2.

The above example describes the method of using the card of the present invention as a bank CD card only, but it is also possible to apply the card to other uses.

In the above embodiment, the card is shown to comprise the display region 2 and the storage region 3 of a transmission type liquid crystal structure, but in other embodiments, use of a reflection type liquid crystal structure does not diminish the effect of the retention of data. In such a case, a laser beam is reflected in the electrode section of the card which is one part of the pair of electrodes for memory, so that it is possible to make one of the substrates from metal, whereby the card can be made at a lower price.

In addition, in the case where an external terminal is not provided in the card it is still possible to read the memory of the card even without using an electrical connection, and in this case the storage section works as a ROM.

Also, it is possible to add two-color dye within the FLC to store and display data in guest-host mode. In this case, there is the feature that the polarized light means may be one or zero.

By incorporating in the interior of the card form a display device and a storage region, which use ferroelectric liquid crystals, as opposed to what has been available up to the present in cards with magnetic card systems, a memory function is provided in the card itself, and at least part of the memory provided by the display region can be checked visually at anytime. A special terminal device is therefore unnecessary for inspection of at least part of the data.

In addition, because power is necessary only for rewriting, it is not necessary to have a source of power in the card itself. If a power source is provided on the card, a solar cell may be used.

Also, because it is possible to provide a card with the storage region and the display region having substantially the same structure, when the card is prepared, a card with two functions can be created at a low cost using the same process as for conventional liquid crystal display devices, and a memory card which can easily be mass-produced is obtained.

The storage region 2 of the card has substantially the same structure as the display region 3. However, no data in the storage region is externally displayed, and is known unless it is read out with dedicated equipment. Therefore the card can be used as an ID card. Also, as with the display region, a source of power such as batteries and the like is unnecessary, and control equipment such as a CPU and the like is not required. Therefore, the structure of the device is simple and it is possible to produce the device in large volumes at low cost. Also, the reliability of the stored data is improved by providing the data storage means and the display means. In addition, rewriting is impossible unless a voltage or heat is applied to the liquid crystal, so the data cannot be erased by normal, everyday temperature changes and is therefore very stable, keeping the advantages that it is possible to reuse the card by revising or changing the stored data.

In addition, because a light polarizing means applied to the card can be commonly used for the display region and the storage region, lower cost production is possible.

## Claims

1. A credit-card like information-carrying device comprising a data storage portion (3) which is adapted for the non-volatile storage of data and arranged so that stored data can be read only by means of external equipment, the device being characterised in that said data storage portion (3) comprises a first liquid crystal region of the device and in that the device further comprises a display portion (2) constituted by a second liquid crystal region of the device which is adapted and arranged for the display of data to a user.

2. An information carrying device as claimed in claim 1, wherein said first and second liquid crystal regions (3,2) comprise respective ferroelectric liquid crystal layers (7) disposed between first and second opposed card substrates (4,10), at least one of said substrates being transparent, and respective electrode arrangements (5,9) associated with said substrates (4,10) for applying electric fields to said liquid crystal layers.

3. An information-carrying device as claimed in claim 2, wherein said electrode arrangements each comprise electrodes (5,9) provided on opposing surfaces of said substrates (4,10) with the respective liquid crystal layer (7) therebetween.

4. An information-carrying device as claimed in claim 2 or 3 wherein the electrode arrangement associated with said second liquid crystal region defines a matrix structure.

5. An information-carrying device as claimed in claim 2 or 3 or 4, further comprising a pair of terminals (5′,9′) connected to the electrode arrangement of said first liquid crystal region (3) of the device for receiving electrical signals from an external data reading device.

6. An information-carrying device as claimed in claim 5 wherein said terminals are arranged to receive electrical power signals and control signals required for operation of said data storage portion (3) of the device.

7. An information-carrying device as claimed in any preceding claim, wherein said first and second liquid crystal regions are made of the same ferroelectric liquid crystal material.

8. An information-carrying device as claimed in any preceding claim, wherein each liquid crystal region further comprises a pair of orientation control films (6,8) provided on opposing surfaces of said substrates (4,10), one of said control films being made of polyimide and the other being made of SiO2.

9. An information-carrying device as claimed in any preceding claim, further comprising an integrated circuit connected to said liquid crystal storage and display regions (2,3) of the device.

10. An information-carrying device as claimed in claim 9, further comprising a solar cell for supplying electrical power to the device.

11. An information-carrying device as claimed in any preceding claim, wherein the visible display of data is in the form of letters, characters, symbols, or other images.

12. An information-carrying device as claimed in any preceding claim, wherein said first liquid crystal region (3) is formed with divisions (23) at bit pitch intervals.

## Patentansprüche

1. Kreditkartenähnliche, informationstragende Einrichtung mit einem Datenspeicherbereich (3), der an das nichtflüchtige Speichern von Daten angepaßt und so ausgebildet ist, daß abgespeicherte Daten nur durch eine externe Ausrüstung gelesen werden können, **dadurch gekennzeichnet**, **daß** der Datenspeicherbereich (3) einen ersten Flüssigkristallbereich der Einrichtung enthält und die Einrichtung ferner einen Anzeigebereich (2) enthält, der von einem zweiten Flüssigkristallbereich der Einrichtung gebildet wird, der für eine Anzeige von Daten an einen Benutzer angepaßt und dafür ausgebildet ist.

2. Informationstragende Vorrichtung nach Anspruch 1, bei der der erste und der zweite Flüssigkristallbereich (3, 2) jeweilige ferroelektrische Flüssigkristallschichten (7) aufweisen, die zwischen einem ersten und einem zweiten Kartensubstrat (4, 10), die einander gegenüberstehen, angeordnet sind, wobei mindestens eines der Substrate durchsichtig ist, und mit jeweiligen Elektrodenanordnungen (5, 9), die den Substraten (4, 10) zugeordnet sind, um elektrische Felder an die Flüssigkristallschichten zu legen.

3. Informationstragende Einrichtung nach Anspruch 2, bei der die Elektrodenanordnungen jeweils Elektroden (5, 9) aufweisen, die an einander gegenüberstehenden Flächen der Substrate (4, 10) vorhanden sind, wobei die jeweilige Flüssigkristallschicht (7) dazwischen liegt.

4. Informationstragende Einrichtung nach einem der Ansprüche 2 oder 3, bei der die dem zweiten Flüssigkristallbereich zugeordnete Elektrodenanordnung eine Matrixstruktur festlegt.

5. Informationstragende Einrichtung nach einem der Ansprüche 2, 3 oder 4, ferner mit einem Paar Anschlüsse (5′, 9′), die an die Elektrodenanordnung des ersten Flüssigkristallbereichs (3) der Einrichtung angeschlossen sind, um elektrische Signale von einer externen Datenlesevorrichtung zu empfangen.

6. Informationstragende Einrichtung nach Anspruch 5, bei der die Anschlüsse so ausgebildet sind, daß sie elektrische Spannungsignale und Steuersignale empfangen, die zum Betreiben des Datenspeicherbereichs (3) der Einrichtung erforderlich sind.

7. Informationstragende Einrichtung nach einem der vorstehenden Ansprüche, bei der der erste und der zweite Flüssigkristallbereich aus demselben ferroelektrischen Flüssigkristallmaterial bestehen.

8. Informationstragende Einrichtung nach einem der vorstehenden Ansprüche, bei der jeder Flüssigkristallbereich ferner ein Paar Ausrichtungseinstellfilme (6, 8) aufweist, die an einander gegenüberstehenden Flächen der Substrate (4, 10) vorhanden sind, wobei einer der Einstellfilme aus Polyimid und der andere aus SiO₂ besteht.

9. Informationstragende Einrichtung nach einem der vorstehenden Ansprüche, ferner mit einer an den Flüssigkristallspeicherbereich und den Anzeigebereich (2, 3) der Einrichtung angeschlossenen integrierten Schaltung.

10. Informationstragende Einrichtung nach Anspruch 9, ferner mit einer Solarzelle zum Zuführen elektrischer Energie zur Einrichtung.

11. Informationstragende Einrichtung nach einem der vorstehenden Ansprüche, bei der die sichtbare Darstellung von Daten in Form von Buchstaben, Zeichen, Symbolen oder anderen Bildern erfolgt.

12. Informationstragende Einrichtung nach einem der vorstehenden Ansprüche, bei der der erste Flüssigkristallbereich (3) mit Unterteilungen (23) mit Bitteilungsabstand ausgebildet ist.

## Revendications

1. Dispositif de support d'information en forme de carte de crédit, comprenant une partie de stockage de données (3) qui est adaptée au stockage non volatil de données et agencée de manière que des données stockées puissent être lues seulement au moyen d'un équipement externe, le dispositif étant caractérisé en ce que ladite partie de stockage de données (3) comprend une première zone de cristaux liquides de dispositif et en ce que le dispositif comprend en outre une partie d'affichage (2) constituée par une deuxième zone de cristaux liquides du dispositif, qui est adaptée et agencée pour l'affichage de données à un utilisateur.

2. Dispositif de support d'information selon la revendication 1, dans lequel lesdites première et deuxième zones de cristaux liquides (3, 2) comprennent des couches de cristaux liquides ferroélectriques (7) respectives, disposées entre des premier et deuxième substrats de carte (4, 10) opposés, au moins l'une desdits substrats étant transparent, et des agencements d'électrodes (5, 9) respectifs associés audit substrat (4, 10) afin d'appliquer des champs électriques auxdites couches de cristaux liquides.

3. Dispositif de support d'information selon la revendication 2, dans lequel lesdits agencements d'électrodes comprennent chacun des électrodes (5, 9) prévues sur des surfaces opposées desdits substrats (4, 10) avec la couche de cristaux liquides (7) respective placée entre elles.

4. Dispositif de support d'information selon la revendication 2 ou 3, dans lequel l'agencement d'électrodes associé à ladite deuxième zone de cristaux liquides définit une structure de matrice.

5. Dispositif de support d'information selon la revendication 2 ou 3 ou 4, comprenant en outre un couple de bornes (5′, 9′) connectées à l'agencement d'électrodes de ladite première zone de cristaux liquides (3) de dispositif, pour recevoir des signaux électriques depuis un dispositif de lecture de données externe.

6. Dispositif de support d'information selon la revendication 5, dans lequel lesdites bornes sont agencées pour recevoir des signaux de puissance électrique et des signaux de commande nécessaires pour le fonctionnement de ladite partie de stockage de données (3) du dispositif.

7. Dispositif de support d'information selon l'une quelconque des revendications précédentes, dans lequel lesdites première et deuxième zones de cristaux liquides sont constituées du même matériau de cristaux liquides ferroélectrique.

8. Dispositif de support d'information selon l'une quelconque des revendications précédentes, dans lequel chaque zone de cristaux liquides comprend en outre un couple de films de commande d'orientation (6, 8) prévus sur les surfaces opposées desdits substrats (4, 10), l'un de sdits films de commande étant réalisé en polyimide et l'autre étant réalisé en SiO2.

9. Dispositif de support d'information selon l'une quelconque des revendications précédentes, comprenant en outre un circuit intégré connecté auxdites zones de stockage et d'affichage (2, 3) à cristaux liquides du dispositif.

10. Dispositif de support d'information selon la revendication 9, comprenant en outre une pile solaire pour fournir une puissance électrique au dispositif.

11. Dispositif de support d'information selon l'une quelconque des revendications précédentes, dans lequel l'affichage visible de données se présente sous la forme de lettres, de caractères, de symboles ou d'autres images.

12. Dispositif de support d'information selon l'une quelconque des revendications précédentes, dans lequel ladite première zone de cristaux liquides (3) est formée avec des divisions (23) à des intervalles d'espacement de bit.
